# EUROPEAN PATENT APPLICATION

(11) **EP 1 263 228 A2**
(43) Date of publication of application: **04.12.2002**
(21) Application number: 02253311.1
(22) Date of filing: 13.05.2002
(51) Int. Cl.: H04N 7/088

(54) **Data modulation method and video signal processing apparatus**

(30) Priority: 14.05.2001 JP 2001143746
(71) Applicant: SONY CORPORATION, Tokyo 141 (JP)
(72) Inventor: Yamazaki, Takahiro, c/o Intellectual Property Dept, Shinagawa-ku, Tokyo 141 (JP); Kori, Teruhiko, c/o Intellectual Property Dept., Shinagawa-ku, Tokyo 141 (JP); Ezaki, Tadashi, c/o Intellectual Property Dept., Shinagawa-ku, Tokyo 141 (JP)
(74) Representative: Turner, James Arthur

(57) **Abstract**

In a 625P TV signal, which is a progressive-scan signal in a 625-scanning-line 50-frame method, an aspect ratio and copyright protection information, such as copy-generation management information, are superposed on an effective video component in one or more lines in a vertical blanking period, according to a signal form conforming to the EIAJ (Electronic Industries Association of Japan) CPR-1204-1 standard, or to the ETSI EN300294: Wide Screen Signalling (WSS) standard.

## Description

The present invention relates to data modulation methods and video-signal processing apparatuses, and more particularly, to a video modulation method and a video-signal processing apparatus in which an aspect ratio and copyright protection information, such as copy-generation management information, are superposed on a 625P (progressive) TV signal, which is a progressive-scan signal in a 625-scanning-line 50-frame system.

A method has been known for transferring a teletext signal, a closed caption signal, and others with the use of a vertical blanking interval data (VBID) signal during a vertical blanking period of a video signal in a conventional technology.

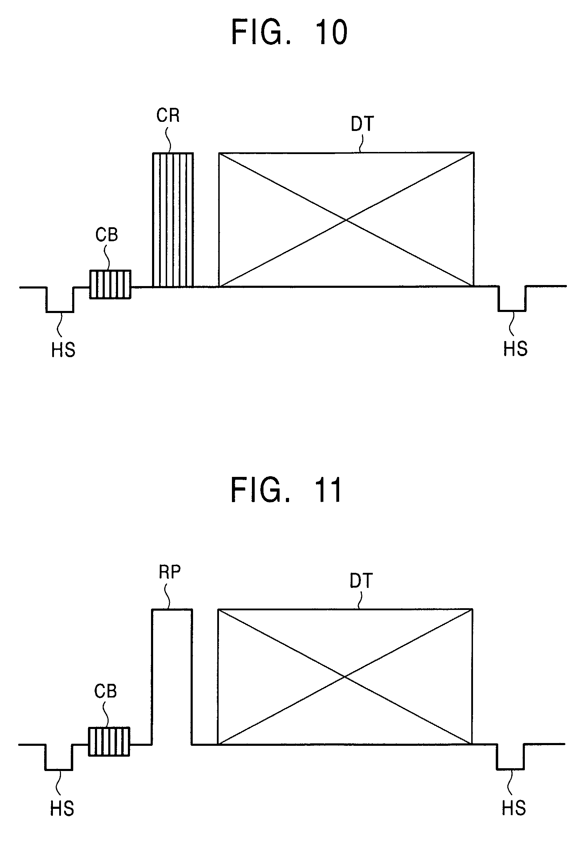

Such a data signal includes a color burst component CB, a clock reference component CR for generating sampling clocks used for data sampling, and a data component DT having a predetermined number of bits, in that order, as shown in Fig. 10 of the accompanying drawings.

Alternatively, as shown in Fig. 11 of the accompanying drawings, such a data signal includes a color burst component CB, a reference pulse component RP for indicating the contents of data, and a data component DT having a predetermined number of bits.

The 625P TV signal itself is not generally used although a VBID signal can be superposed on a video signal. In addition, there was no specific method or apparatus for transferring an aspect ratio and copyright protection information, such as copy-generation management information, in the 625P TV signal.

Various respective aspects and features of the invention are defined in the appended claims. Features from the dependent claims may be combined with features of the independent claims as appropriate and not merely as explicitly set out in the claims.

According, embodiments of the present invention can provide a data modulation method and a video-signal processing apparatus in which an aspect ratio and copyright protection information, such as copy-generation management information, are superposed on a 625P TV signal.

The present invention provides a data modulation method including the steps of placing a reference signal substantially having an amplitude 70% of a white peak level and a 20-bit digital signal having an amplitude 70% or 0% of the white peak level in a 625P TV signal, which is a progressive-scan signal in a 625-scanning-line 50-frame system; encoding an aspect ratio and copyright protection information, including copy-generation management information, in the 20-bit digital signal; and superposing the 20-bit digital signal on an effective video component in one or more lines in a vertical blanking period.

In the data modulation method, the 625P TV signal may have a horizontal scanning frequency fh of 31.25 kHz, a clock frequency fc = fh*33 of 1.03125 MHz, and a basic time constant T = 1/(fh*33).

The present invention also provides a data modulation method including the step of superposing an aspect ratio and copyright protection information, including copy-generation management information, on an effective video component in one or more lines in a vertical blanking period in a 625P TV signal, which is a progressive-scan signal in a 625-scanning-line 50-frame method, according to a signal form conforming to the ETSI EN300294: Wide Screen Signalling (WSS) standard.

In the data modulation method, the signal form may have the same structures of run-in, start-bit, and data-bit signal components as those specified in the standard; a clock frequency Fs of 5 MHz; a period Ts of 200 ns; and the same signal rising time, signal amplitude, modulation method, preamble, data structure, and parity as those specified in the standard.

In the data modulation method, the signal form may have a pulse period of run-in, start-bit, and data-bit signal components, half that specified in the standard; the same structures of the run-in, start-bit, and data-bit signal components as those specified in the standard; a clock frequency Fs of 10 MHz; a period Ts of 100 ns; and the same signal rising time, signal amplitude, modulation method, preamble, data structure, and parity as those specified in the standard.

The present invention also provides a video-signal processing apparatus for generating an image by progressive scanning with a 625P TV signal in a 625-scanning-line 50-frame method, including superposition means for placing a reference signal having an amplitude 70% of a white peak level and a 20-bit digital signal having an amplitude 70% or 0% of the white peak level, for encoding an aspect ratio and copyright protection information, including copy-generation management information, in the 20-bit digital signal; and for superposing the 20-bit digital signal on an effective video component in one or more lines in a vertical blanking period.

In the video-signal processing apparatus, the 625P TV signal may have a horizontal scanning frequency fh of 31.25 kHz, a clock frequency fc = fh*33 of 1.03125 MHz, and a basic time constant T = 1/(fh*33).

The present invention also provides a video-signal processing apparatus for generating an image by progressive scanning with a 625P TV signal in a 625-scanning-line 50-frame method, including superposition means for superposing an aspect ratio and copyright protection information, such as copy-generation management information, on an effective video component in one or more lines in a vertical blanking period, according to a signal form conforming to the ETSI EN300294: Wide Screen Signalling (WSS) standard.

In the video-signal processing apparatus, the signal form may have the same structures of run-in, start-bit, and data-bit signal components as those specified in the standard; a clock frequency Fs of 5 MHz; a period Ts of 200 ns; and the same signal rising time, signal amplitude, modulation, preamble, data structure, and parity as those specified in the standard.

In the video-signal processing apparatus, the signal form may have a pulse period of run-in, start-bit, and data-bit signal components, half that specified in the standard; the same structures of the run-in, start-bit, and data-bit signal components as those specified in the standard; a clock frequency Fs of 10 MHz; a period Ts of 100 ns; and the same signal rising time, signal amplitude, modulation method, preamble, data structure, and parity as those specified in the standard.

The present invention also provides a video-signal processing apparatus for generating an image by progressive scanning with a 625P TV signal in a 625-scanning-line 50-frame method, and for placing a reference signal substantially having an amplitude 70% of a white peak level and a 20-bit digital signal substantially having an amplitude 70% or 0% of the white peak level, for encoding an aspect ratio and copyright protection information, including copy-generation management information, in the 20-bit digital signal, and for superposing the 20-bit digital signal on an effective video component in one or more lines in a vertical blanking period, including identification-signal demodulation means for demodulating an identification signal superposed on an effective video component in one or more lines in a vertical blanking period of the 625P TV signal, and for obtaining copyright protection information from the demodulated identification signal; and recording means for generating new copy-generation management information according to copy-generation management information included in the copyright protection information obtained by the identification-signal demodulation means, and for recording the new copy-generation management information in a predetermined recording medium.

In the video-signal processing apparatus, the 625P TV signal may have a horizontal scanning frequency fh of 31.25 kHz, a clock frequency fc = fh*33 of 1.03125 MHz, and a basic time constant T = 1/(fh*33).

The present invention also provides a video-signal processing apparatus for generating an image by progressive scanning with a 625P TV signal in a 625-scanning-line 50-frame system, and for superposing an aspect ratio and copyright protection information, such as copy-generation management information, on an effective video component in one or more lines in a vertical blanking period, according to a signal form conforming to the ETSI EN300294: Wide Screen Signalling (WSS) standard, including signal demodulation means for demodulating a signal superposed on an effective video component in one or more lines in a vertical blanking period of the 625P TV signal, and for obtaining copyright protection information from the demodulated signal; and recording means for generating new copy-generation management information according to copy-generation management information included in the copyright protection information obtained by the signal demodulation means, and for recording the new copy-generation management information in a predetermined recording medium.

In the video-signal processing apparatus, the signal form may have a clock frequency Fs of 5 MHz; a period Ts of 200 ns; and the same signal rising time, signal amplitude, modulation method, preamble, data structure, and parity as those specified in the standard.

In the video-signal processing apparatus, the signal form may have the same structures of run-in, start-bit, and data-bit signal components as those specified in the standard; a clock frequency Fs of 5 MHz; a period Ts of 200 ns; and the same signal rising time, signal amplitude, modulation method, preamble, data structure, and parity as those specified in the standard.

In the video-signal processing apparatus, the signal form may have a pulse period of run-in, start-bit, and data-bit signal components, half that specified in the standard; the same structures of the run-in, start-bit, and data-bit signal components as those specified in the standard; a clock frequency Fs of 10 MHz; a period Ts of 100 ns; and the same signal rising time, signal amplitude, modulation, preamble, data structure, and parity as those specified in the standard.

As described above, in a data modulation method according to the present invention, when an identification signal having copyright protection information and having a structure conforming to the EIAJ CPR-1204-1 standard is superposed on a 625P TV signal, since the 625P TV signal has the same signal form as a 525P NTSC TV signal, only the horizontal scanning frequency Fh used in a signal generation circuit and a signal detection circuit needs to be changed. Therefore, circuit developments can be shared, and circuits can be shared in NTSC/PAL dual receivers. In addition, a circuit and an IC can be made more compact.

When data having a structure conforming to the ETSI EN300294: Wide Screen Signalling (WSS) standard is disposed in a 625P TV signal, since the 625P TV signal has the same pulse width and contents as a 625I TV signal, WSS detection for the 625I TV signal can be used almost as is. Circuit developments can be shared, and circuits can be shared in 625I/625P receivers. In addition, a circuit and an IC can be made more compact.

Furthermore, since, in a video-signal processing apparatus according to the present invention, an aspect ration and copy-generation management information are superposed, an aspect ratio can be automatically set and illegal duplication can be protected.

The invention will now be described by way of example with reference to the accompanying drawings, throughout which like parts are referred to by like references, and in which:
Fig. 1 is a view showing a waveform of a 625P TV signal in a vertical blanking period, according to the present invention.
Fig. 2 is a view showing the waveform of an identification signal.
Fig. 3 is a view showing control data.
Fig. 4 is a view showing CGMS.
Fig. 5 is a view showing a WSS signal.
Fig. 6 is a view showing the waveform of a 625I WSS signal in a vertical blanking period.
Fig. 7 is a view showing the waveform of a 625P WSS signal in a vertical blanking period.
Fig. 8 is a view showing the waveform of another 625P WSS signal in a vertical blanking period.
Fig. 9 is a block diagram of a video-signal processing apparatus according to the present invention.
Fig. 10 is a view showing the waveform of a VBID signal.
Fig. 11 is a view showing the waveform of another VBID signal.

A data modulation method and a video-signal processing apparatus according to embodiments of the present invention will be described below by referring to the drawings.

In a data modulation method according to the present invention, an aspect ratio and copyright protection information, such as copy-generation management information, are superposed on a 625P TV signal, which is a progressive-scan signal in a 625-scanning-line 50-frame method.

There are two methods for superposing copyright protection information. One is a method in which copyright protection information is superposed in an identification-signal form conforming to the EIAJ (Electronic Industries Association of Japan) CPR-1204-1 standard, on an effective video component in one or more lines in a vertical blanking period, and the other is a method in which copyright protection information is superposed in a signal form conforming to the ETSI EN300294: Wide Screen Signalling (WSS) standard, on an effective video component in one or more lines in a vertical blanking period.

The method in which copyright protection information is superposed in an identification-signal form conforming to the EIAJ CPR-1204-1 standard, on an effective video component in one or more lines in a vertical blanking period will be described first.

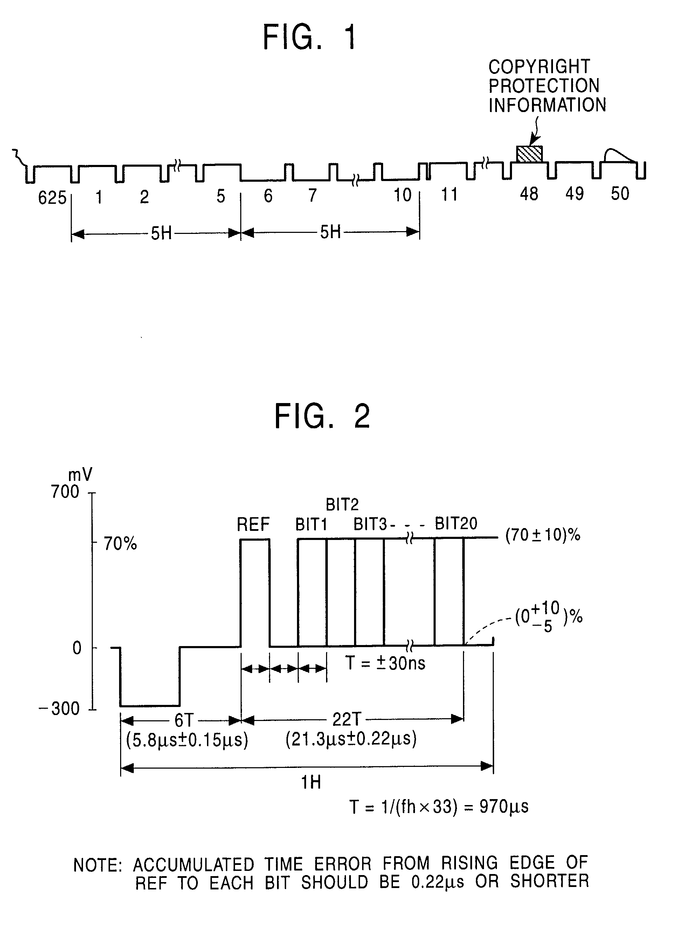

As shown in Fig. 1, in an embodiment, a signal having an identification-signal form conforming to the EIAJ CPR-1204-1 standard is superposed at the 48th line in a vertical blanking period of a luminance signal. In the present embodiment, a signal is superposed at the 48th line. The present invention is not limited to this case. A signal may be superposed at another line, such as the 49th line or the 50th line, or at a plurality of lines.

The EIAJ CPR-1204-1 specifies a video ID signal used for a TV signal in a 525-line 60-frame NTSC system for copy-generation management, in other words, for a case in which information duplication (copying) is restricted for units employing a digital recording method.

A video ID signal for a TV signal is an identification signal indicating that the corresponding data is a video signal, and includes a reference component and 20-bit control data, as shown in Fig. 2.

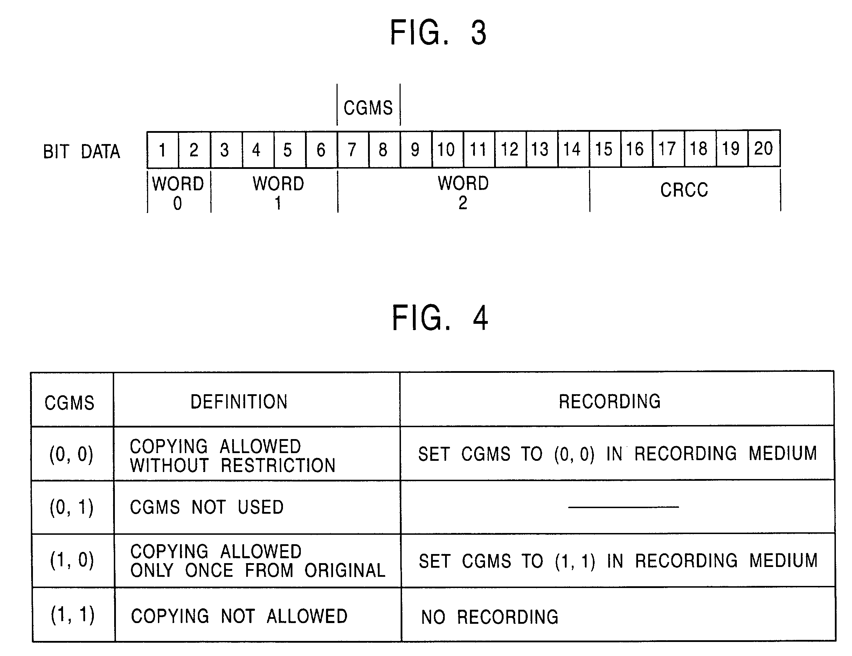

Fig. 3 shows the format of the control data. First and second bits constitute WORD0, which is used for aspect information.

Third to sixth bits constitute WORD1, which is a flag for identifying information to be transferred by WORD2. When copy-generation management information is sent, WORD1 is set to (0, 0, 0, 0).

Seventh to 14th bits constitute WORD2, which is the body information of the control data. The seventh and eighth bits indicate copy-generation management information (hereinafter called CGMS), which shows a generation to which duplication is allowed, in other words, which shows the number of times duplication is allowed for the TV signal.

Fig. 4 shows a specific CGMS definition. CGMS has four states: (0, 0) indicates that duplication is allowed without any restrictions, (1, 0) indicates that duplication is allowed only once from the original, (1, 1) indicates that duplication is not allowed, and (0, 1) indicates that CGMS is not used.

Fifteenth to twentieth bits are used for an error-detection code (hereinafter called CRCC) for determining whether an error is included in the first 14 bits, from WORD0 to WORD2.

Control data having the above format is modulated, as shown in Fig. 2, by the horizontal scanning frequency fh = 31.25 kHz, the clock frequency fc = fh*33 = 1.03125 MHz, and the basic time constant T = 1/(fh*33) of a 625P TV signal to generate a video ID signal having an identification-signal form.

The video ID signal having an identification-signal form has a reference component Ref having an amplitude 70% of a white peak level and 20-bit digital control data having an amplitude 70% or 0% of the white peak level.

When a signal having a structure conforming to the EIAJ CPR-1204-1 standard is superposed on a 625P TV signal, the 625P TV signal has the same signal form as a 525P TV signal in an NTSC system. Therefore, only the clock frequency fc of a signal generation circuit and a signal detection circuit used for a 525P TV signal needs to be changed. Circuit developments can be shared and circuits can be shared in NTSC/PAL dual receivers. In addition, a circuit and an IC can also be made compact.

The method in which copyright protection information is superposed in a signal form conforming to the ETSI EN300294: Wide Screen Signalling (WSS) standard, on an effective video component in one or more lines in a vertical blanking period will be described next.

Like the above-described method, in which copyright protection information is superposed in an identification-signal form conforming to the EIAJ CPR-1204-1 standard, an aspect ratio and copyright protection information, such as copy-generation management information, are superposed in a signal form conforming to the ETSI EN300294: Wide Screen Signalling (WSS) standard, on an effective video component at one or more lines in a vertical blanking period of a 625P TV signal, which is a progressive-scan signal in a 625-scanning-line 50-frame method.

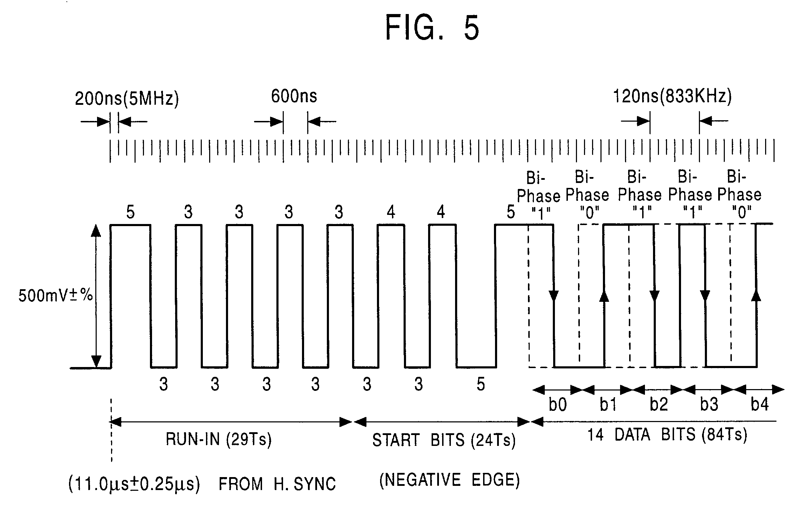

A WWS signal conforming to the ETSI EN300294: Wide Screen Signalling (WSS) standard has a data transfer rate of 833 kHz (5 MHz/6) and is bi-phase modulated, as shown in Fig. 5. The signal has a run-in component and a start-bit component in addition to a data component.

In this WSS signal, the data component has 14 bits, and includes the aspect ratio and the subtitle information of a main screen, surround information, and copyright information.

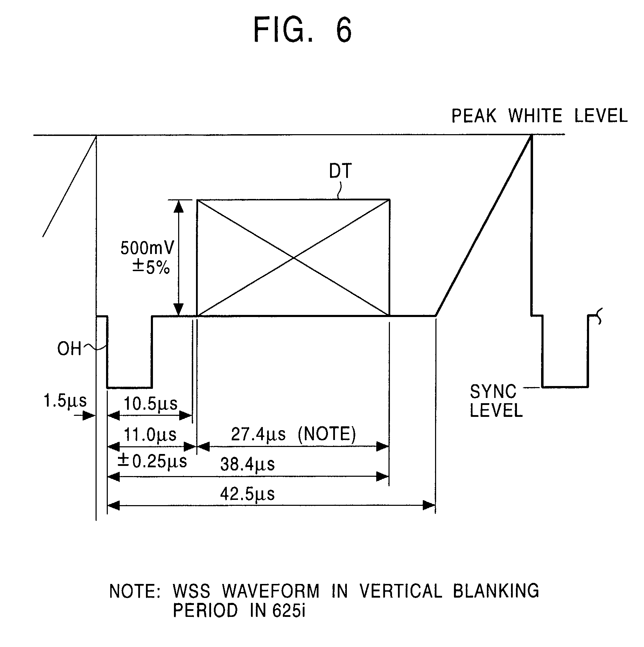

Fig. 6 shows a waveform of a WSS signal used for a 625I PAL TV signal. In the signal, transmission data occupies an area almost equal to half an effective screen area. With the use of this feature, the transmission data is adapted to a 625P TV signal as is.

More specifically, the same run-in component, start-bit component, and 14-bit data component as those shown in Fig. 5 are used; a clock frequency Fs is set to 5 MHz; a period Ts is set to 200 ns; and a signal rising time, a signal amplitude, a modulation method, a preamble, the structure and contents of data, and a parity all conforming to the above-described standard are used.

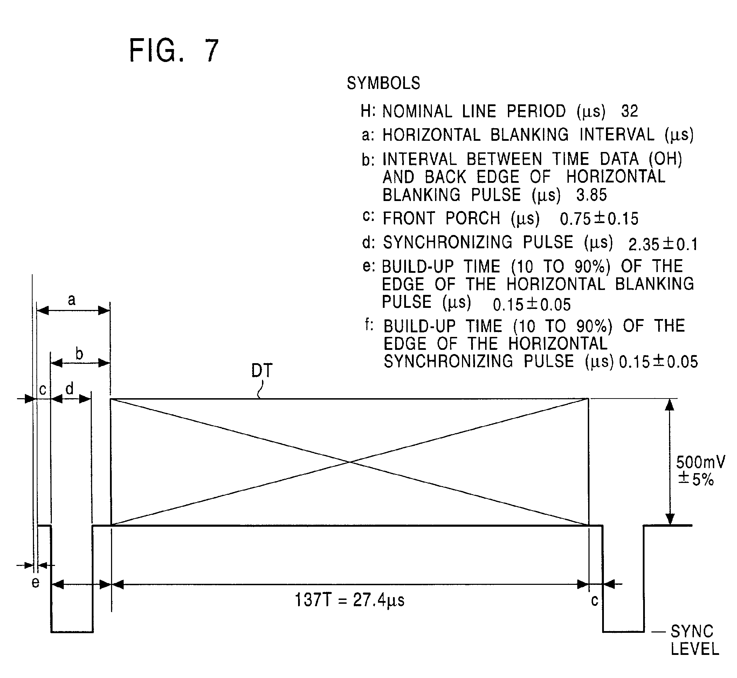

Fig. 7 shows a case in which the 625I TV signal form in a vertical blanking period shown in Fig. 6 is applied to a 625P TV signal. To obtain complete compatibility with the data section of the 625I TV signal, arrangement is made such that a data section DT fits in the horizontal scanning period of the 625P TV signal without changing the structure of the data section DT.

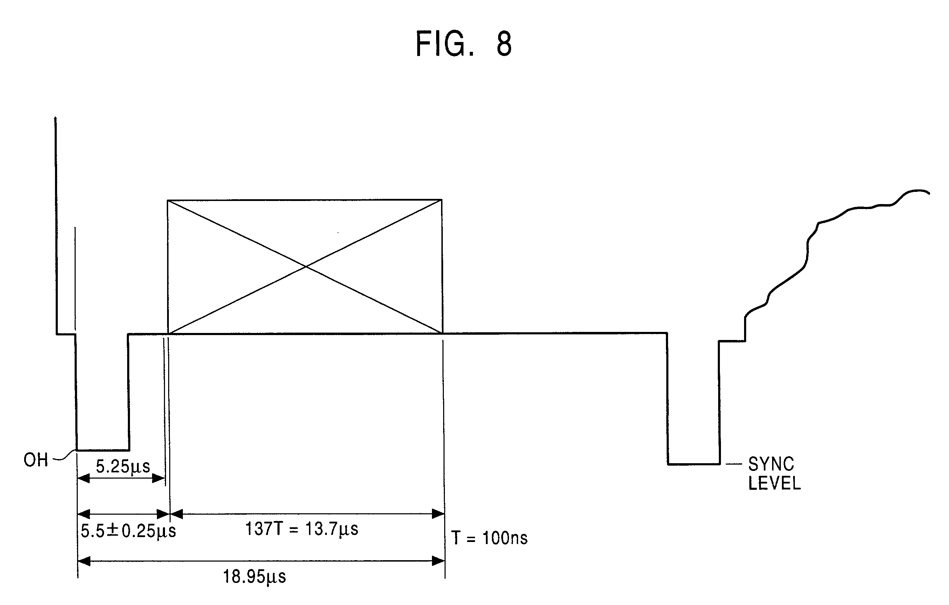

Fig. 8 shows a modification in which a signal having a pulse period half that of a signal conforming to the ETSI EN300294: Wide Screen Signalling (WSS) standard is superposed at a scanning line specified in advance. The same run-in component, start-bit component, and 14-bit data component as those specified in the above-described standard are used; the clock frequency Fs is set to 10 MHz; the period Ts is set to 100 ns; and a rising time, a signal amplitude, a modulation method, a preamble, a data structure, and a parity all conforming to the above-described standard are used.

When the same data arrangement as in a WSS signal is selected, since the same contents as in a 625I TV signal are used with the pulse width only being changed to its half, if the structure of a WSS detection circuit for a 625I TV signal is modified analogously, the circuit can be relatively easily developed, the circuit can be relatively easily shared in 625I/625P receivers, and the circuit and an IC can be made compact.

A video-signal processing apparatus for processing control data, including copy-generation management information, for a 625P TV signal will be described next by referring to the drawings.

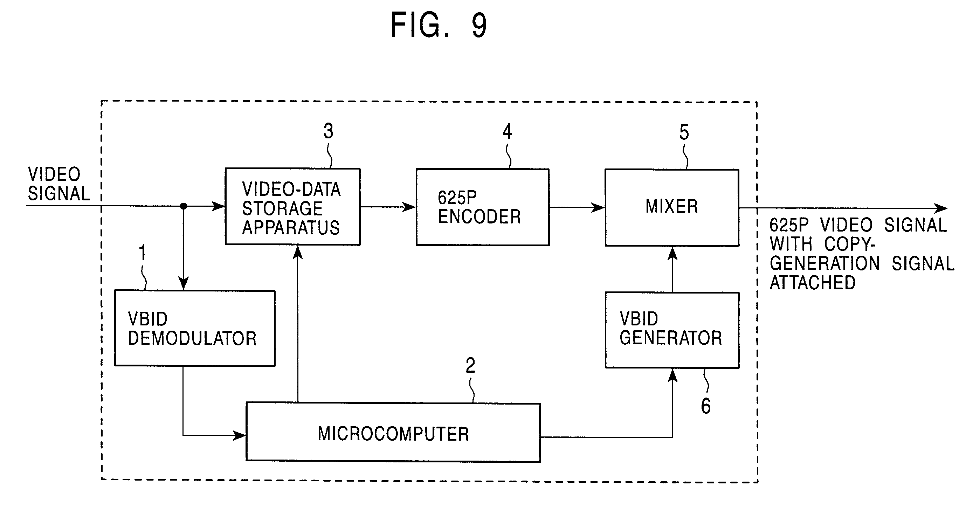

As shown in Fig. 9, the video-signal processing apparatus is formed of a VBID demodulator for demodulating a video VBID signal superposed on an effective video component in one or more lines in a vertical blanking period of a 625I or 625P TV signal; a microcomputer 2 for receiving the copy generation management information of the video component, demodulated by the VBID demodulator 1; a video-data storage apparatus 3 for storing the video component and the demodulated copy generation management information; a 625P encoder 4 for encoding the video component stored in the video-data storage apparatus 3 to generate a 625P video signal; a VBID generator 6 for generating copy-generation management information which indicates that the video component has been stored and reproduced once in this processing apparatus; and a mixer 5 for mixing the video signal encoded by the 625P encoder 4 with the copy-generation management information generated by the VBID generator 6.

In such a structure, a VBID demodulator for demodulating a video VBID signal superposed on an effective video component in one or more lines in a vertical blanking period of a 625I or 625P TV signal is first demodulated by the VBID demodulator 1, and the copy-generation management information is input to the microcomputer 2.

The video component is stored in the video-data storage apparatus 3. The copy-generation management information of the video component is also stored.

In a reproduction operation, a signal reproduced from the video-data storage apparatus 3 is input to the 625P encoder 4, and encoded to generate a 625P video signal.

Copy-generation management information which indicates that the video component has been stored and reproduced once in this processing apparatus is generated by the VBID generator 6, and mixed with the output signal of the 625P encoder 4 by the mixer 5. A 625P video signal having the copy-generation management information is output.

In this way, since copyright protection information can be superposed in a vertical blanking period of a 625P TV signal and copy-generation management information is updated when a video component is reproduced, illegal duplication is prevented.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A data modulation method comprising the steps of:
placing a reference signal substantially having an amplitude 70% of a white peak level and a 20-bit digital signal substantially having an amplitude 70% or 0% of the white peak level in a 625P TV signal, which is a progressive-scan signal in a 625-scanning-line 50-frame system;
encoding an aspect ratio and copyright protection information, including copy-generation management information, in the 20-bit digital signal; and
superposing the 20-bit digital signal on an effective video component in one or more lines in a vertical blanking period.

2. A data modulation method according to Claim 1, wherein the 625P TV signal has a horizontal scanning frequency fh of 31.25 kHz, a clock frequency fc = fh*33 of 1.03125 MHz, and a basic time constant T = 1/(fh*33).

3. A data modulation method comprising the step of superposing an aspect ratio and copyright protection information, including copy-generation management information, on an effective video component in one or more lines in a vertical blanking period in a 625P TV signal, which is a progressive-scan signal in a 625-scanning-line 50-frame system, according to a signal form conforming to the ETSI EN300294: Wide Screen Signalling (WSS) standard.

4. A data modulation method according to Claim 3, wherein the signal form has the same structures of run-in, start-bit, and data-bit signal components as those specified in the standard; a clock frequency Fs of 5 MHz; a period Ts of 200 ns; and the same signal rising time, signal amplitude, modulation method, preamble, data structure, and parity as those specified in the standard.

5. A data modulation method according to Claim 3, wherein the signal form has a pulse period of run-in, start-bit, and data-bit signal components, half that specified in the standard; the same structures of the run-in, start-bit, and data-bit signal components as those specified in the standard; a clock frequency Fs of 10 MHz; a period Ts of 100 ns; and the same signal rising time, signal amplitude, modulation method, preamble, data structure, and parity as those specified in the standard.

6. A video-signal processing apparatus for generating an image by progressive scanning with a 625P TV signal in a 625-scanning-line 50-frame system, comprising superposition means for placing a reference signal substantially having an amplitude 70% of a white peak level and a 20-bit digital signal substantially having an amplitude 70% or 0% of the white peak level, for encoding an aspect ratio and copyright protection information, including copy-generation management information, in the 20-bit digital signal; and for superposing the 20-bit digital signal on an effective video component in one or more lines in a vertical blanking period.

7. A video-signal processing apparatus according to Claim 6, wherein the 625P TV signal has a horizontal scanning frequency fh of 31.25 kHz, a clock frequency fc = fh*33 of 1.03125 MHz, and a basic time constant T = 1/(fh*33).

8. A video-signal processing apparatus for generating an image by progressive scanning with a 625P TV signal in a 625-scanning-line 50-frame system, comprising superposition means for superposing an aspect ratio and copyright protection information, such as copy-generation management information, on an effective video component in one or more lines in a vertical blanking period, according to a signal form conforming to the ETSI EN300294: Wide Screen Signalling (WSS) standard.

9. A video-signal processing apparatus according to Claim 8, wherein the signal form has the same structures of run-in, start-bit, and data-bit signal components as those specified in the standard; a clock frequency Fs of 5 MHz; a period Ts of 200 ns; and the same signal rising time, signal amplitude, modulation method, preamble, data structure, and parity as those specified in the standard.

10. A video-signal processing apparatus according to Claim 8, wherein the signal form has a pulse period of run-in, start-bit, and data-bit signal components, half that specified in the standard; the same structures of the run-in, start-bit, and data-bit signal components as those specified in the standard; a clock frequency Fs of 10 MHz; a period Ts of 100 ns; and the same signal rising time, signal amplitude, modulation, preamble, data structure, and parity as those specified in the standard.

11. A video-signal processing apparatus
for generating an image by progressive scanning with a 625P TV signal in a 625-scanning-line 50-frame system, and
for placing a reference signal substantially having an amplitude 70% of a white peak level and a 20-bit digital signal substantially having an amplitude 70% or 0% of the white peak level, for encoding an aspect ratio and copyright protection information, including copy-generation management information, in the 20-bit digital signal, and for superposing the 20-bit digital signal on an effective video component in one or more lines in a vertical blanking period, comprising:
identification-signal demodulation means for demodulating an identification signal superposed on an effective video component in one or more lines in a vertical blanking period of the 625P TV signal, and for obtaining copyright protection information from the demodulated identification signal; and
recording means for generating new copy-generation management information according to copy-generation management information included in the copyright protection information obtained by the identification-signal demodulation means, and for recording the new copy-generation management information in a predetermined recording medium.

12. A video-signal processing apparatus according to Claim 11, wherein the 625P TV signal has a horizontal scanning frequency fh of 31.25 kHz, a clock frequency fc = fh*33 of 1.03125 MHz, and a basic time constant T = 1/(fh*33).

13. A video-signal processing apparatus for generating an image by progressive scanning with a 625P TV signal in a 625-scanning-line 50-frame system, and for superposing an aspect ratio and copyright protection information, such as copy-generation management information, on an effective video component in one or more lines in a vertical blanking period, according to a signal form conforming to the ETSI EN300294: Wide Screen Signalling (WSS) standard, comprising:
signal demodulation means for demodulating a signal superposed on an effective video component in one or more lines in a vertical blanking period of the 625P TV signal, and for obtaining copyright protection information from the demodulated signal; and
recording means for generating new copy-generation management information according to copy-generation management information included in the copyright protection information obtained by the signal demodulation means, and for recording the new copy-generation management information in a predetermined recording medium.

14. A video-signal processing apparatus according to Claim 13, wherein the signal form has a clock frequency Fs of 5 MHz; a period Ts of 200 ns; and the same signal rising time, signal amplitude, modulation, preamble, data structure, and parity as those specified in the standard.

15. A video-signal processing apparatus according to Claim 13, wherein the signal form has the same structures of run-in, start-bit, and data-bit signal components as those specified in the standard; a clock frequency Fs of 5 MHz; a period Ts of 200 ns; and the same signal rising time, signal amplitude, modulation, preamble, data structure, and parity as those specified in the standard.

16. A video-signal processing apparatus according to Claim 13, wherein the signal form has a pulse period of run-in, start-bit, and data-bit signal components, half that specified in the standard; the same structures of the run-in, start-bit, and data-bit signal components as those specified in the standard; a clock frequency Fs of 10 MHz; a period Ts of 100 ns; and the same signal rising time, signal amplitude, modulation, preamble, data structure, and parity as those specified in the standard.
